# FASCICULE DE BREVET EUROPEEN

(11) **EP 2 861 450 B1**
(45) Date de publication et mention de la délivrance du brevet: **13.07.2016**
(21) Numéro de dépôt: 13734681.3
(22) Date de dépôt: 19.06.2013
(51) Int. Cl.: B60L 3/00, H04B 10/80

(54) **PROCÉDÉ ET SYSTÈME POUR LA MISE EN VEILLE ET LE RÉVEIL D'UN MODULE DE COMMANDE DE VÉHICULE AUTOMOBILE ÉLECTRIQUE**
VERFAHREN UND SYSTEM ZUR DESAKTIVIERUNG UND AKTIVIERUNG EINES STEUERMODULS EINES ELEKTRISCHEN FAHRZEUGES
METHOD AND SYSTEM FOR DISABLING AND ENABLING AN ELECTRIC MOTOR VEHICLE CONTROL MODULE

(30) Priorité: 19.06.2012 FR 1201736
(43) Date de publication de la demande: 22.04.2015
(73) Titulaire: Valeo Systemes Thermiques, 78320 Le Mesnil-Saint-Denis Cedex (FR)
(72) Inventeur: PUZENAT, Bertrand, 78180 Montigny Le Bretonneux (FR)
(74) Mandataire: Pellegrini, Marie Claude
(86) Numéro de dépôt international: PCT/EP2013/062697
(87) Numéro de publication internationale: WO 2013/189963

(56) Documents cités:
- EP-A1- 2 164 162
- EP-A1- 2 353 941
- JP-A- 2008 017 595
- JP-A- 2008 043 189

## Description

La présente invention concerne les modules de commande de circuit électrique de véhicules automobiles, en particulier de véhicules électriques, et plus particulièrement la mise en veille et le réveil des éléments qui le composent.

Dans un véhicule automobile électrique ou hybride, une partie du circuit électrique est alimentée avec une haute tension, de l'ordre de 400 Volts, tandis que pour les circuits de commande, générant et véhiculant les signaux de commande, l'alimentation se fait en basse tension, de l'ordre de 5 à 12 Volts.

La partie alimentée en haute tension comporte en général tous les modules fonctionnels de puissance, tels que le moteur de propulsion du véhicule et le chauffage du véhicule. La haute tension permet à puissance égale d'abaisser l'intensité, et donc les pertes par effet Joule. La partie alimentée en basse tension comporte quant à elle en particulier les éléments de commande, tels qu'un bus de connexion.

Les deux parties du circuit électrique sont séparées par une isolation, appelée barrière galvanique, permettant d'éviter une décharge de haute tension dans la partie basse tension. Les passages à travers la barrière galvanique sont réalisés au moyen de transformateurs électriques, placés entre les lignes haute et basse tension appelées à interagir.

Pour le contrôle des fonctions du circuit, celui-ci comporte un microcontrôleur, qui pilote, selon des commandes appliquées par l'utilisateur via des modules de commutation, et/ou des signaux émanant de capteurs reliés par le bus basse tension, les différents modules fonctionnels du circuit. En particulier, il est impossible de faire passer des mesures analogiques de tension ou intensité à travers la barrière galvanique sans recourir à un convertisseur coûteux.

Aussi, si le microcontrôleur se trouve du côté basse tension de la barrière galvanique, il ne pourra recevoir des mesures concernant les modules fonctionnels haute tension du circuit qu'au moyen de convertisseurs intercalés, qui nuisent à la précision et/ou sont coûteux.

Si le microcontrôleur se trouve du côté haute tension de la barrière galvanique, il lui sera impossible de contrôler la mise en veille du dispositif sans l'implémentation de lignes découplées galvaniquement supplémentaires, le contrôle des éléments formant la barrière galvanique est alors en particulier problématique.

Pour pallier au moins partiellement les défauts précédemment mentionnés, l'invention a pour objet un module de commande électronique de circuit électrique de véhicule automobile, destiné à être relié de manière galvaniquement isolée à un circuit électrique de véhicule automobile comportant au moins un module fonctionnel alimenté en haute tension, le module de commande comprenant :
- un bus de connexion, destiné à être relié à une interface extérieure, configuré pour conduire des signaux de consigne électriques basse tension,
- un microcontrôleur, configuré pour contrôler le au moins un module fonctionnel en fonction dés signaux de consigne,
caractérisé en ce que le microcontrôleur et le bus de connexion sont reliés par un coupleur non-galvanique, pourvu d'une partie basse tension et d'une partie haute tension, aptes à échanger un signal et découplées galvaniquement, et en ce que le module de commande comporte en outre un transformateur électrique; relié via des sorties aux parties haute et basse tension du coupleur non-galvanique et au microcontrôleur de sorte à fournir leur alimentation, le transformateur étant relié à une source via un interrupteur, et le bus de connexion comprenant un organe de commutation contrôlant l'état ouvert ou fermé de l'interrupteur.

Ainsi, le module de commande selon la présente invention permet une mise en veille, ce qui assure une consommation réduite de l'électronique de commande.

Le module de commande peut en outre comporter une ou plusieurs des caractéristiques suivantes, prises seules ou en combinaison.

Le bus de connexion est un bus LIN.

Le bus de connexion est, alternativement, un bus CAN ou un bus FlexRay™.

Le coupleur non-galvanique est un photocoupleur ou un coupleur capacitif.

Le module de commande comporte en outre une ligne de signal de maintien reliant le bus de connexion et le microcontrôleur via le coupleur non-galvanique, et l'organe de commutation est configuré pour ouvrir l'interrupteur en l'absence d'un signal de maintien sur la ligne de signal de maintien et en ce que le microcontrôleur est configuré pour interrompre le signal de maintien en cas d'absence d'activité du au moins un module fonctionnel pendant une durée prédéterminée.

Le transformateur comporte une sortie isolée galvaniquement du bus de connexion, fournissant une alimentation très basse tension.

Ladite sortie fournissant une alimentation basse tension peut alors être reliée au microcontrôleur, et ledit microcontrôleur être configuré pour moduler l'alimentation basse tension reçue en entrée afin d'obtenir un signal de commande en sortie pour basculer des transistors haute tension de contrôle du au moins un module fonctionnel.

L'invention a aussi pour objet un procédé de mise en veille associé d'un module de commande électronique de circuit électrique de véhicule automobile tel que précédemment décrit, caractérisé en ce qu'il comporte les étapes suivantes,
- le bus de connexion reçoit une requête de mise en veille,
- à la réception de la requête de mise en veille le bus de connexion ouvre l'interrupteur,
- le bus de connexion est mis en veille.

L'invention a aussi pour objet un procédé de mise en veille associé d'un module de commande électronique de circuit électrique de véhicule automobile tel que précédemment décrit, caractérisé en ce qu'il comporte les étapes suivantes :
- le bus de connexion reçoit un signal d'activation,
- le bus de connexion sort de son état de veille,
- le bus de connexion ferme l'interrupteur.

L'invention a aussi pour objet une procédé tel que décrit précédemment, caractérisé en ce qu'il comporte en outre les étapes suivantes :
- le microcontrôleur détecte une inactivité prolongée,
- le microcontrôleur déclenche la mise en veille d'au moins une partie du module fonctionnel,
- le microcontrôleur envoie une requête de mise en veille au bus de connexion.

D'autres avantages et caractéristiques de l'invention apparaissent à la lecture de la description suivante des figures parmi lesquelles :
- Fig. 1 est une représentation schématique d'un circuit électrique de véhicule comportant un module de commande selon l'invention.
- Fig. 2 est un organigramme reprenant schématiquement les principales étapes d'un procédé de mise en veille de module de commande selon l'invention.
- Fig. 3 est un organigramme reprenant schématiquement les principales étapes d'un procédé de réveil de module de commande selon l'invention,

Sur toutes les figures les mêmes références se rapportent aux mêmes éléments.

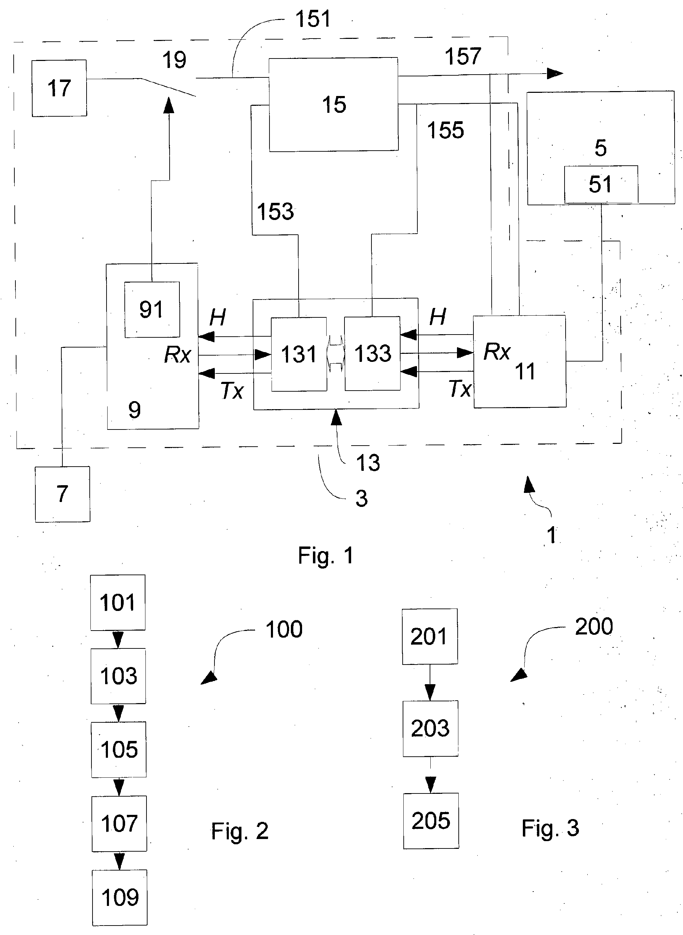

La figure 1 montre de façon schématique un circuit électrique 1 de véhicule automobile pourvu d'un module de commande 3.

En figure 1, le circuit électrique 1 comporte en plus du module de commande 3 un module fonctionnel 5, fonctionnant en haute tension. Le module fonctionnel 5 représente ici la charge du circuit électrique en haute tension. Ce peut être, dans le cas d'un véhicule électrique ou hybride, le moteur du véhicule et/ou un dispositif de chauffage.

Le module fonctionnel 5 fonctionne à haute tension et à forte puissance, il doit donc être isolé des éléments basse tension du module de commande 3.

Le circuit électrique 1 comporte aussi une interface extérieure 7 reliée au module de commande 3, du côté basse tension du circuit 1, comportant par exemple des capteurs et ou des commutateurs. Les capteurs génèrent des signaux en fonction de leurs détections, signaux utilisés pour adapter le fonctionnement du module fonctionnel à des conditions détectées par les capteurs. Les commutateurs permettent à un utilisateur d'influer sur le mode de fonctionnement du module fonctionnel 5.

Les capteurs peuvent par exemple comporter des capteurs de température de la batterie, pour permettre un bridage de la puissance du moteur en cas d'échauffement de la batterie du véhicule. Alternativement ou en parallèle, les capteurs peuvent comporter des capteurs de température d'habitacle, pour adapter la puissance d'un système de chauffage dudit habitacle en fonction de la température détectée.

Les commutateurs peuvent par exemple comporter des commutateurs implémentés dans l'habitacle, au niveau du tableau de bord en particulier, qu'un utilisateur place dans un état de commutation particulier pour obtenir un mode de fonctionnement correspondant du module fonctionnel 5.

Le module de commande 3 comprend un bus de connexion 9, comprenant des connexions entre les éléments du circuit et au moins un pilote. Le bus de connexion 9 peut par exemple être un bus de type LIN (Local Interconnection Network), CAN (Controller Area Network), ou FlexRay™. Le bus LIN est particulièrement adapté si le nombre de capteurs et de commutateurs reste limité, du fait de sa simplicité, de sa robustesse et de son faible coût.

Le bus de connexion 9 est configuré de sorte à recevoir de l'interface extérieure 7 des signaux de consigne, qui doivent être transmis à un microcontrôleur 11, relié aux modules fonctionnels 5. Le bus de connexion 9 est une interface entre un bus de communication du module de commande 3 et le microcontrôleur 11, le bus de connexion 9 étant connu sous le nom de *bus transceiver* en anglais. Le microcontrôleur 11 contrôle en particulier un certain nombre de transistors haute tension 51 des modules fonctionnels 5, transistors haute tension 51 basculés au moyen d'un signal basse tension.

Le bus de connexion 9 et le microcontrôleur 11 sont reliés par des lignes de signal, ici au nombre de trois : une ligne de réception *Rx*, une ligne de transmission *Tx,* et une ligne de signal de maintien *H* (pour « hold »). La ligne de réception *Rx* sert à transmettre des signaux de consigne du bus de connexion 9 au microcontrôleur 11, la ligne de transmission *Tx* sert à transmettre des signaux de consigne du microcontrôleur 11 au bus de connexion 9. La ligne de signal de maintien sert à transmettre un signal de maintien du microcontrôleur 11 au bus de connexion 9.

Les lignes *Rx, Tx, H* sont interrompues par un coupleur non-galvanique 13. Le coupleur non-galvanique 13 est placé entre le bus de connexion 9 et le microcontrôleur 11. Le coupleur non-galvanique 13 permet la transmission de signaux à travers les lignes *Rx, Tx, H* tout en assurant l'isolation galvanique entre le bus de connexion 9 et le microcontrôleur 11.

Le coupleur non-galvanique 13 comporte une partie basse tension 131 et une partie haute tension 133. La partie basse tension 131 est raccordée au bus de connexion 9, la partie haute tension 133 est raccordée au microcontrôleur 11. Les parties haute et basse tension 131, 133 sont reliées entre elles par un couplage non-galvanique, par exemple un photocouplage, de sorte à réaliser l'isolation galvanique. Dans cette configuration, les parties haute et basse tension 131, 133 du coupleur non-galvanique 13 comportent des diodes électroluminescentes et des phototransistors.

Le couplage peut être de type analogique, si le microcontrôleur 11 doit suivre un signal de consigne variant continûment, ou bien de type numérique si les états du module fonctionnel 5 que contrôle le microcontrôleur 11 peuvent être réduits à un nombre fini.

Alternativement, le coupeur non-galvanique 13 peut être un coupleur électromécanique, qui relaie le signal par basculement d'interrupteurs ayant une valeur numérique, ou bien un contacteur statique, utilisant des semi-conducteurs pour accomplir cette tâche.

Il est à noter que le microcontrôleur 11 se trouve du côté haute tension de la barrière galvanique, ici matérialisée par le coupleur non-galvanique 13.

Le module de commande 3 comporte en outre un transformateur 15, par exemple à inductance, alimenté par une source basse tension 17. Le transformateur 15 reçoit du courant d'alimentation de la source basse tension 17 à une entrée 151, et utilise ledit courant d'alimentation pour induire des courants de sortie dans des sorties 153, 155, 157, reliées aux éléments du circuit 1 à alimenter.

La source basse tension 17 est en général une connexion à la batterie du véhicule via d'éventuels adaptateurs de tension. Le transformateur 15 est un isolant galvanique, utilisant par exemple un ou plusieurs circuits de couplage magnétique.

La première sortie 153 est reliée à la partie basse tension 131 du coupleur non-galvanique 13, la deuxième sortie 155 est reliée à la partie haute tension 133 du coupleur 13, et au microcontrôleur 11.

Le transformateur 15 peut comporter une sortie supplémentaire 157 produisant un courant basse tension utilitaire. Ce courant utilitaire peut en particulier être de tension différente par rapport au courant fourni par les autres sorties 151, 153, 155.

Le courant basse tension utilitaire peut être utilisé pour basculer les transistors que contrôle le microcontrôleur 11. Pour ce faire, le microcontrôleur 11 module le courant basse tension utilitaire et utilise le signal modulé comme signal de commande de transistors haute tension contrôlant des éléments de la charge 5.

Le transformateur 15 peut en particulier être combiné ou intégré dans le ou les transformateurs usuellement disposés au niveau des barrières galvaniques pour produire des courants basse tension d'alimentation ou de signal. En particulier, en bloquant le courant utilitaire le microcontrôleur 11 génère un état « bas », et en laissant passer le courant utilitaire le microcontrôleur 11 génère un état « haut ».

Entre l'entrée 151 du transformateur 15 et la source basse tension 17 est disposé un interrupteur 19. Cet interrupteur 19 peut notamment être un transistor de puissance, de type MOSFET par exemple. L'interrupteur 19 est contrôlé par un organe de commutation 91 intégré dans le bus de connexion 9. L'organe de commutation 91 bascule l'interrupteur 19 entre les états ouvert et fermé en fonction de signaux véhiculés sur le bus 9. En particulier, l'organe de commutation 91 du bus de connexion 9 est configuré pour ouvrir l'interrupteur 19 lorsqu'aucun signal de maintien n'est détecté sur la ligne de signal de maintien *H* et pour fermer ledit interrupteur 19 lorsque un signal de maintien est présent. Inversément, l'organe de commutation 91 est aussi configuré pour fermer l'interrupteur 19 en présence d'un signal de maintien sur la ligne de signal de maintien *H*.

L'organe de commutation 91 est, pour son état en veille ou réveillé, solidaire du bus de connexion 9 en ce que si le bus de connexion 9 est mis en veille, l'organe de commutation 91 entre en état de veille aussi, et réciproquement, un réveil du bus 9 entraîne un réveil de l'organe de commutation 91.

La figure 2 reprend schématiquement les principales étapes du procédé de mise en veille 100 associé au système précédemment décrit. Par mise en veille on entend qu'on met les différents éléments du circuit 1 dans un état de consommation minimale, en particulier pour préparer une absence d'utilisation prolongée.

La première étape 101 est la réception d'une requête de mise en veille par le bus de connexion 9. Une requête de mise en veille est émise par l'interface extérieure 7, par exemple soit lors d'une interruption du contact (retrait de la clé du véhicule), soit parce qu'un détecteur détecte une condition de mise en veille (surchauffe dangereuse, charge de la batterie très basse, etc.).

Par exemple ladite requête peut être émise par le microcontrôleur 11, si celui ci détecte une inactivité prolongée du dispositif.

La détection d'inactivité par le microcontrôleur 11 peut par exemple se faire en mémorisant la consommation électrique du ou des modules fonctionnels 5 sur une période prédéterminée, généralement de l'ordre de plusieurs secondes, et en vérifiant que celle-ci ne dépasse pas un certain seuil au delà duquel une activité du module 5 est certaine, pendant la période de mémorisation.

Si une requête de mise à l'arrêt est reçue par le bus de connexion 9 d'une autre provenance, elle est d'abord transmise au microcontrôleur 11, qui met hors tension ou en veille tous les éléments possibles du ou des modules fonctionnels 5.

Le microcontrôleur 11 procède à une mise hors tension ou en veille des éléments encore alimentés du ou desdits modules fonctionnels 5 au cours de l'étape suivante 103.

Suite à la mise hors tension ou en veille des éléments électriques du ou des modules fonctionnels 5, le microcontrôleur 11 suspend l'émission du signal de maintien sur la ligne de signal de maintien *H* au cours de l'étape suivante 105.

Lorsqu'il ne reçoit plus de signal de maintien, le bus de connexion 9 déclenche l'ouverture de l'interrupteur 19 au cours de l'étape suivante 107 au moyen de l'organe de commutation 91. L'ouverture de l'interrupteur 19 provoque l'arrêt de l'alimentation du transformateur 15. Dès lors que le transformateur 15 n'est plus alimenté, ses sorties 153, 155, 157 ne délivrent plus de courant. L'absence de courant aux sorties 153, 155, 157 signifie la mise à l'arrêt des parties haute tension et basse tension 131, 133 du coupleur 13, du microcontrôleur 11 et du courant utilitaire.

Finalement, le bus de connexion 9 se met en veille au cours de la dernière étape 109, en appliquant les procédures de mises en veille propres à son protocole (LIN, CAN, FlexRay™, etc.). Cette mise en veille entraîne celle de l'organe de commutation 91.

Dès lors, tous les éléments du circuit 1 sont à leur état de consommation minimal.

La figure 3 est une représentation schématique des principales étapes d'un procédé de réveil 200 d'un module de commande 3 selon l'invention.

La première étape 201 est la réception d'un signal d'activation émanant de l'interface extérieure 7 par le bus de connexion 9. À l'étape suivante 203, le bus de connexion 9 ferme l'interrupteur 19 au moyen de l'organe de commutation 91.

Un signal d'activation peut par exemple être émis par un détecteur de démarrage de l'interface 7 lors du démarrage du véhicule.

La fermeture de l'interrupteur 19 entraîne la mise sous tension du transformateur 15, et partant l'alimentation des éléments raccordés aux sorties 153, 155, 157 : les parties haute et basse tension 131, 133 du coupleur 13, le microcontrôleur 11 et la ligne de courant utilitaire sont à nouveau alimentés.

Le microcontrôleur 11, une fois alimenté, émet à nouveau un signal de maintien et reprend la détection d'inactivité à l'étape suivante 205.

Le module de commande 3 tel que décrit permet donc la mise en oeuvre simple de procédés de réveil et de mise en veille dudit module de commande 3. En particulier, la totalité des éléments impliqués peut être mise hors tension, sans que le microcontrôleur 11 aie à être implémenté du côté basse tension de la barrière galvanique. Dès lors, seules les trois lignes *Rx, Tx, H* doivent présenter un couplage isolant galvaniquement, au lieu de toutes les lignes de contrôle des modules fonctionnels 5.

L'invention permet donc la réalisation d'un module de commande moins coûteux et permettant une diminution de la consommation au repos de l'électronique 1 du véhicule automobile.

## Revendications

1. Module de commande (3) électronique de circuit électrique (1) de véhicule automobile, destiné à être relié de manière galvaniquement isolée à un circuit électrique (1) de véhicule automobile comportant au moins un module fonctionnel (5) alimenté en haute tension, le module de commande (3) comprenant :
- un bus de connexion (9), destiné à être relié à une interface extérieure (7), configuré pour conduire des signaux de consigne électriques basse tension, émanant de l'interface extérieure (7) aux éléments du module de commande (3) auxquels ils sont adressés,
- un microcontrôleur (11), configuré pour contrôler le au moins un module fonctionnel (5) en fonction des signaux de consigne,
**caractérisé en ce que** le microcontrôleur, (11) et le bus de connexion (9) sont reliés par un coupleur (13) non-galvanique, pourvu d'une partie basse tension (131) et d'une partie haute tension (133), aptes à échanger au moins un signal et découplées galvaniquement, et **en ce que** le module de commande comporte en outre un transformateur électrique (15), relié via des sorties (153, 155, 157) aux parties haute et basse tension (131, 133) du coupleur (13) non-galvanique et au microcontrôleur (11) de sorte à fournir leur alimentation, le transformateur (15) étant relié à une source (17) via un interrupteur (19), et le bus de connexion (9) comprenant un organe de commutation (91) contrôlant l'état ouvert ou fermé de l'interrupteur (19).

2. Module de commande selon la revendication 1, **caractérisé en ce que** le bus de connexion (9) est un bus LIN.

3. Module de commande selon la revendication 1, **caractérisé en ce que** le bus de connexion (9) est un bus CAN ou un bus FlexRay™.

4. Module de commande selon la revendication 1, 2 ou 3, **caractérisé en ce que** le coupleur (13) non-galvanique est un photocoupleur.

5. Module de commande selon la revendication 1, 2 ou 3, **caractérisé en ce que** le coupleur (13) non-galvanique est un coupleur capacitif.

6. Module de commande selon l'une des revendications précédentes, **caractérisé en ce qu'**il comporte en outre une ligne de signal de maintien (*H*) reliant le bus de connexion (9) et le microcontrôleur (11) via le coupleur non-galvanique (13), **en ce que** l'organe de commutation (91) est configuré pour ouvrir l'interrupteur (19) en l'absence d'un signal de maintien sur la ligne de signal de maintien (*H*) et **en ce que** l'organe de commutation (91) est configuré pour fermer l'interrupteur (19) en présence d'un signal de maintien sur la ligne de signal de maintien (*H*).

7. Module de commande selon l'une au moins des revendications précédentes, **caractérisé en ce que** le transformateur (15) comporte une sortie (157) isolée galvaniquement du bus de connexion (9), fournissant une alimentation basse tension.

8. Module de commande selon la revendication 7, **caractérisé en ce que** la sortie fournissant une alimentation basse tension (157) est reliée au microcontrôleur (11), et **en ce que** ledit microcontrôleur (11) est configuré pour moduler l'alimentation basse tension reçue en entrée afin d'obtenir un signal de commande en sortie pour basculer des transistors haute tension (51) de contrôle du au moins un module fonctionnel (5).

9. Procédé de mise en veille d'un module de commande (3) électronique de circuit électrique (1) de véhicule automobile, destiné à être relié de manière galvaniquement isolée à un circuit électrique (1) de véhicule automobile comportant au moins un module fonctionnel (5) alimenté en haute tension, le module de commande (3) comprenant :
- un bus de connexion (9), destiné à être relié à une interface extérieure (7), configuré pour conduire des signaux de consigne électriques basse tension, émanant de l'interface extérieure (7) aux éléments du module de commande (3) auxquels ils sont adressés,
- un microcontrôleur (11), configuré pour contrôler le au moins un module fonctionnel (5) en fonction des signaux de consigne,
dans lequel le microcontrôleur (11) et le bus de connexion (9) sont reliés par un coupleur (13) non-galvanique, pourvu d'une partie basse tension (131) et d'une partie haute tension (133), aptes à échanger au moins un signal et découplées galvaniquement, et le module de commande comporte en outre un transformateur électrique (15), relié via des sorties (153, 155, 157) aux parties haute et basse tension (131, 133) du coupleur (13) non-galvanique et au microcontrôleur (11) de sorte à fournir leur alimentation, le transformateur (15) étant relié à une source basse tension (17) via un interrupteur (19) et le bus de connexion (9) comprenant un organe de commutation (91) contrôlant l'état ouvert ou fermé de l'interrupteur (19), **caractérisé en ce qu'**il comporte les étapes suivantes,
- le bus de connexion (9) reçoit une requête de mise en veille,
- à la réception de la requête de mise en veille le bus de connexion (9) ouvre l'interrupteur (19) au moyen de l'organe de commutation (91),
- le bus de connexion (9) est mis en veille.

10. Procédé selon la revendication 9, **caractérisé en ce qu'**il comporte en outre les étapes suivantes :
- le microcontrôleur (11) détecte une inactivité prolongée,
- le microcontrôleur (11) déclenche la mise en veille d'au moins une partie du module fonctionnel (5),
- le microcontrôleur (11) envoie une requête de mise en veille au bus de connexion (9).

11. Procédé de réveil d'un module de commande (3) électronique de circuits électrique (1) de véhicule automobile, destiné à être relié de manière galvaniquement isolée à un circuit électrique (1) de véhicule automobile comportant au moins un module fonctionnel (5) alimenté en haute tension, le module de commande (3) comprenant :
- un bus de connexion (9), destiné à être relié à une interface extérieure (7), configuré pour conduire des signaux de consigne électriques basse tension, émanant de l'interface extérieure (7) aux éléments du module de commande (3) auxquels ils sont adressés,
- un microcontrôleur (11), configuré pour contrôler le au moins un module fonctionnel (5) en fonction des signaux de consigne,
dans lequel le microcontrôleur (11) et le bus de connexion (9) sont reliés par un coupleur (13) non-galvanique, pourvu d'une partie basse tension (131) et d'une partie haute tension (133), aptes à échanger au moins un signal et découplées galvaniquement, et le module de commande comporte en outre un transformateur électrique (15), relié via des sorties (153, 155, 157) aux parties haute et basse tension (131, 133) du coupleur (13) non-galvanique et au microcontrôleur (11) de sorte à fournir leur alimentation, le transformateur (15) étant relié à une source basse tension (17) via un interrupteur (19) et le bus de connexion (9) comprenant un organe de commutation (91) contrôlant l'état ouvert ou fermé de l'interrupteur (19), **caractérisé en ce qu'**il comporte les étapes suivantes :
- le bus de connexion (9) reçoit un signal d'activation,
- le bus de connexion (9) sort de son état de veille,
le bus de connexion (9) ferme l'interrupteur (19) au moyen de l'organe de commutation (91).

## Patentansprüche

1. Elektronisches Steuermodul (3) eines elektrischen Schaltkreises (1) eines Kraftfahrzeugs, das dazu bestimmt ist, galvanisch getrennt mit einem elektrischen Schaltkreis (1) eines Kraftfahrzeugs verbunden zu werden, der mindestens ein mit Hochspannung versorgtes Funktionsmodul (5) aufweist, wobei das Steuermodul (3) enthält:
- einen Verbindungsbus (9), der dazu bestimmt ist, mit einer externen Schnittstelle (7) verbunden zu werden, konfiguriert, von der externen Schnittstelle (7) kommende elektrische Niederspannungs-Sollwertsignale zu den Elementen des Steuermoduls (3) zu leiten, an die sie gerichtet sind,
- einen Mikrocontroller (11), konfiguriert, das mindestens eine Funktionsmodul (5) abhängig von den Sollwertsignalen zu kontrollieren,
**dadurch gekennzeichnet, dass** der Mikrocontroller (11) und der Verbindungsbus (9) durch einen nicht-galvanischen Koppler (13) verbunden sind, der mit einem Niederspannungsteil (131) und mit einem Hochspannungsteil (133) versehen ist, die mindestens ein Signal austauschen können und galvanisch getrennt sind, und dass das Steuermodul außerdem einen elektrischen Transformator (15) aufweist, der über Ausgänge (153, 155, 157) mit den Hochspannungs- und Niederspannungsteilen (131, 133) des nicht-galvanischen Kopplers (13) und mit dem Mikrocontroller (11) verbunden ist, um ihre Versorgung zu liefern, wobei der Transformator (15) über einen Schalter (19) mit einer Quelle (17) verbunden ist, und der Verbindungsbus (9) ein Schaltorgan (91) enthält, das den offenen oder geschlossenen Zustand des Schalters (19) kontrolliert.

2. Steuermodul nach Anspruch 1, **dadurch gekennzeichnet, dass** der Verbindungsbus (9) ein LIN-Bus ist.

3. Steuermodul nach Anspruch 1, **dadurch gekennzeichnet, dass** der Verbindungsbus (9) ein CAN-Bus oder ein FlexRay™-Bus ist.

4. Steuermodul nach Anspruch 1, 2 oder 3, **dadurch gekennzeichnet, dass** der nicht-galvanische Koppler (13) ein Optokoppler ist.

5. Steuermodul nach Anspruch 1, 2 oder 3, **dadurch gekennzeichnet, dass** der nicht-galvanische Koppler (13) ein kapazitiver Koppler ist.

6. Steuermodul nach einem der vorhergehenden Ansprüche, **dadurch gekennzeichnet, dass** es außerdem eine Haltesignalleitung (H) aufweist, die den Verbindungsbus (9) und den Mikrocontroller (11) über den nicht-galvanischen Koppler (13) verbindet, und dass das Schaltorgan (91) konfiguriert ist, den Schalter (19) in Abwesenheit eines Haltesignals auf der Haltesignalleitung (H) zu öffnen, und dass das Schaltorgan (91) konfiguriert ist, den Schalter (19) in Gegenwart eines Haltesignals auf der Haltesignalleitung (H) zu schließen.

7. Steuermodul nach mindestens einem der vorhergehenden Ansprüche, **dadurch gekennzeichnet, dass** der Transformator (15) einen galvanisch vom Verbindungsbus (9) getrennten Ausgang (157) aufweist, der eine Niederspannungsversorgung liefert.

8. Steuermodul nach Anspruch 7, **dadurch gekennzeichnet, dass** der eine Niederspannungsversorgung liefernde Ausgang (157) mit dem Mikrocontroller (11) verbunden ist, und dass der Mikrocontroller (11) konfiguriert ist, die am Eingang empfangene Niederspannungsversorgung zu modulieren, um am Ausgang ein Steuersignal zu erhalten, um Kontroll-Hochspannungstransistoren (51) des mindestens einen Funktionsmoduls (5) umzuschalten.

9. Verfahren, um ein elektronisches Steuermodul (3) eines elektrischen Schaltkreises (1) eines Kraftfahrzeugs in den Standby-Zustand zu versetzen, das dazu bestimmt ist, galvanisch getrennt mit einem elektrischen Schaltkreis (1) eines Kraftfahrzeugs verbunden zu werden, der mindestens ein mit Hochspannung versorgtes Funktionsmodul (5) aufweist, wobei das Steuermodul (3) enthält:
- einen Verbindungsbus (9), der dazu bestimmt ist, mit einer externen Schnittstelle (7) verbunden zu werden, konfiguriert, von der externen Schnittstelle (7) kommende elektrische Niederspannungs-Sollwertsignale zu den Elementen des Steuermoduls (3) zu leiten, an die sie gerichtet sind,
- einen Mikrocontroller (11), konfiguriert, das mindestens eine Funktionsmodul (5) abhängig von den Sollwertsignalen zu kontrollieren,
wobei der Mikrocontroller (11) und der Verbindungsbus (9) durch einen nicht-galvanischen Koppler (13) verbunden sind, der mit einem Niederspannungsteil (131) und mit einem Hochspannungsteil (133) versehen ist, die mindestens ein Signal austauschen können und galvanisch getrennt sind, und das Steuermodul außerdem einen elektrischen Transformator (15) aufweist, der über Ausgänge (153, 155, 157) mit den Hochspannungs- und Niederspannungsteilen (131, 133) des nicht-galvanischen Kopplers (13) und mit dem Mikrocontroller (11) verbunden ist, um ihre Versorgung zu liefern, wobei der Transformator (15) über einen Schalter (19) mit einer Niederspannungsquelle (17) verbunden ist, und der Verbindungsbus (9) ein Schaltorgan (91) enthält, das den offenen oder geschlossenen Zustand des Schalters (19) kontrolliert, **dadurch gekennzeichnet, dass** es die folgenden Schritte aufweist,
- der Verbindungsbus (9) empfängt eine Anforderung des Versetzens in den Standby-Zustand,
- bei Empfang der Anforderung des Versetzens in den Standby-Zustand öffnet der Verbindungsbus (9) den Schalter (19) mittels des Schaltorgans (91),
- der Verbindungsbus (9) wird in den Standby-Zustand versetzt.

10. Verfahren nach Anspruch 9, **dadurch gekennzeichnet, dass** es außerdem die folgenden Schritte aufweist:
- der Mikrocontroller (11) erfasst eine längere Inaktivität,
- der Mikrocontroller (11) löst das Versetzen in den Standby-Zustand mindestens eines Teils des Funktionsmoduls (5) aus,
- der Mikrocontroller (11) sendet eine Anforderung des in den Standby-Zustand Versetzens an den Verbindungsbus (9).

11. Verfahren zum Wecken eines elektronischen Steuermoduls (3) eines elektrischen Schaltkreises (1) eines Kraftfahrzeugs, das dazu bestimmt ist, galvanisch getrennt mit einem elektrischen Schaltkreis (1) eines Kraftfahrzeugs verbunden zu werden, der mindestens ein mit Hochspannung versorgtes Funktionsmodul (5) aufweist, wobei das Steuermodul (3) enthält:
- einen Verbindungsbus (9), der dazu bestimmt ist, mit einer externen Schnittstelle (7) verbunden zu werden, konfiguriert, von der externen Schnittstelle (7) kommende elektrische Niederspannungs-Sollwertsignale zu den Elementen des Steuermoduls (3) zu leiten, an die sie gerichtet sind,
- einen Mikrocontroller (11), konfiguriert, das mindestens eine Funktionsmodul (5) abhängig von den Sollwertsignalen zu kontrollieren,
wobei der Mikrocontroller (11) und der Verbindungsbus (9) durch einen nicht-galvanischen Koppler (13) verbunden sind, der mit einem Niederspannungsteil (131) und mit einem Hochspannungsteil (133) versehen ist, die mindestens ein Signal austauschen können und galvanisch getrennt sind, und das Steuermodul außerdem einen elektrischen Transformator (15) aufweist, der über Ausgänge (153, 155, 157) mit den Hochspannungs- und Niederspannungsteilen (131, 133) des nicht-galvanischen Kopplers (13) und mit dem Mikrocontroller (11) verbunden ist, um ihre Versorgung zu liefern, wobei der Transformator (15) über einen Schalter (19) mit einer Niederspannungsquelle (17) verbunden ist, und der Verbindungsbus (9) ein Schaltorgan (91) enthält, das den offenen oder geschlossenen Zustand des Schalters (19) kontrolliert, **dadurch gekennzeichnet, dass** es die folgenden Schritte aufweist:
- der Verbindungsbus (9) empfängt ein Aktivierungssignal,
- der Verbindungsbus (9) verlässt seinen Standby-Zustand,
- der Verbindungsbus (9) schließt den Schalter (19) mittels des Schaltorgans (91).

## Claims

1. Electronic control module (3) for a motor vehicle electrical circuit (1), intended to be linked in a galvanically isolated manner to a motor vehicle electrical circuit (1) comprising at least one functional module (5) powered at high voltage, the control module (3) comprising:
- a connection bus (9), intended to be linked to an exterior interface (7), configured so as to conduct low-voltage electrical setpoint signals emanating from the exterior interface (7) to the elements of the control module (3) to which they are addressed,
- a microcontroller (11), configured to control the at least one functional module (5) as a function of the setpoint signals,
**characterized in that** the microcontroller (11) and the connection bus (9) are linked by a non-galvanic coupler (13), provided with a low-voltage part (131) and a high-voltage part (133), which are able to exchange at least one signal and are galvanically decoupled, and **in that** the control module furthermore comprises an electrical transformer (15), linked via outputs (153, 155, 157) to the high- and low-voltage parts (131, 133) of the non-galvanic coupler (13) and to the microcontroller (11) so as to provide their power supply, the transformer (15) being linked to a source (17) via a breaker switch (19), and the connection bus (9) comprising a switching member (91) controlling the open or closed state of the breaker switch (19).

2. Control module according to Claim 1, **characterized in that** the connection bus (9) is a LIN bus.

3. Control module according to Claim 1, **characterized in that** the connection (9) bus is a CAN bus or a FlexRay™ bus.

4. Control module according to Claim 1, 2 or 3, **characterized in that** the non-galvanic coupler (13) is a photocoupler.

5. Control module according to Claim 1, 2 or 3, **characterized in that** the non-galvanic coupler (13) is a capacitive coupler.

6. Control module according to one of the preceding claims, **characterized in that** it furthermore comprises a hold signal line *(H)* linking the connection bus (9) and the microcontroller (11) via the non-galvanic coupler (13), **in that** the switching member (91) is configured to open the breaker switch (19) in the absence of a hold signal on the hold signal line *(H),* and **in that** the switching member (91) is configured to close the breaker switch (19) in the presence of a hold signal on the hold signal line *(H).*

7. Control module according to at least one of the preceding claims, **characterized in that** the transformer (15) comprises an outlet (157) galvanically isolated from the connection bus (9), providing a low-voltage power supply.

8. Control module according to Claim 7, **characterized in that** the outlet (157) providing a low-voltage power supply is linked to the microcontroller (11), and **in that** said microcontroller (11) is configured to modulate the low-voltage power supply received on input in order to obtain a control signal on output to trip the high-voltage control transistors (51) of the at least one functional module (5).

9. Method for disabling an electronic control module (3) for a motor vehicle electrical circuit (1), intended to be linked in a galvanically isolated manner to a motor vehicle electrical circuit (1) comprising at least one functional module (5) powered at high voltage, the control module (3) comprising:
- a connection bus (9), intended to be linked to an exterior interface (7), configured so as to conduct low-voltage electrical setpoint signals emanating from the exterior interface (7) to the elements of the control module (3) to which they are addressed,
- a microcontroller (11), configured to control the at least one functional module (5) as a function of the setpoint signals,
wherein the microcontroller (11) and the connection bus (9) are linked by a non-galvanic coupler (13), provided with a low-voltage part (131) and a high-voltage part (133), which are able to exchange at least one signal and are galvanically decoupled, and the control module furthermore comprises an electrical transformer (15), linked via outputs (153, 155, 157) to the high- and low-voltage parts (131, 133) of the non-galvanic coupler (13) and to the microcontroller (11) so as to provide their power supply, the transformer (15) being linked to a low-voltage source (17) via a breaker switch (19), and the connection bus (9) comprising a switching member (91) controlling the open or closed state of the breaker switch (19), **characterized in that** it comprises the following steps:
- the connection bus (9) receives a request for disablement,
- on receiving the request for disablement, the connection bus (9) opens the breaker switch (19) by means of the switching member (91),
- the connection bus (9) is disabled.

10. Method according to Claim 9, **characterized in that** it furthermore comprises the following steps:
- the microcontroller (11) detects prolonged inactivity,
- the microcontroller (11) triggers disablement of at least part of the functional module (5),
- the microcontroller (11) sends a request for disablement to the connection bus (9).

11. Method for enabling an electronic control module (3) for a motor vehicle electrical circuit (1), intended to be linked in a galvanically isolated manner to a motor vehicle electrical circuit (1) comprising at least one functional module (5) powered at high voltage, the control module (3) comprising:
- a connection bus (9), intended to be linked to an exterior interface (7), configured so as to conduct low-voltage electrical setpoint signals emanating from the exterior interface (7) to the elements of the control module (3) to which they are addressed,
- a microcontroller (11), configured to control the at least one functional module (5) as a function of the setpoint signals,
wherein the microcontroller (11) and the connection bus (9) are linked by a non-galvanic coupler (13), provided with a low-voltage part (131) and a high-voltage part (133), which are able to exchange at least one signal and are galvanically decoupled, and the control module furthermore comprises an electrical transformer (15), linked via outputs (153, 155, 157) to the high- and low-voltage parts (131, 133) of the non-galvanic coupler (13) and to the microcontroller (11) so as to provide their power supply, the transformer (15) being linked to a low-voltage source (17) via a breaker switch (19), and the connection bus (9) comprising a switching member (91) controlling the open or closed state of the breaker switch (19), **characterized in that** it comprises the following steps:
- the connection bus (9) receives an activation signal,
- the connection bus (9) exits its disabled state,
the connection bus (9) closes the breaker switch (19) by means of the switching member (91).
